# EUROPEAN PATENT APPLICATION

(11) **EP 2 724 919 A2**
(43) Date of publication of application: **30.04.2014**
(21) Application number: 13189983.3
(22) Date of filing: 24.10.2013
(51) Int. Cl.: B62D 33/02

(54) **Bunk structure**

(30) Priority: 25.10.2012 FI 20126108
(71) Applicant: Kuormaväline Oy, 70780 Kuopio (FI)
(72) Inventor: Svensk, Juha-Matti, 70780 Kuopio (FI); Svensk, Matti, 70780 Kuopio (FI); Ahosola, Jarkko, 70780 Kuopio (FI)
(74) Representative: Kolster Oy Ab

(57) **Abstract**

A bunk structure which comprises a bunk and two vertical supports and in which at the lower end of each vertical support there is arranged at least one first support whose cross-sectional profile has an outer dimension in the transverse direction of the bunk that is smaller than the inner dimension of the cross-sectional profile of the bunk, and a second support which is arranged in the vertical support, on the side of the vertical support, in such a way that it is directed towards the middle part of the bunk structure. In that case the bunk structure may be assembled by sliding the bunk between the first and the second supports.

## Description

### Background

The invention relates to timber load spaces.

Timber load spaces are used in particular in transport vehicles, such as timber trucks and trailers, employed for transportation of logs and other timber material. The timber load spaces typically comprise so-called bunk structures which include a vertical part, i.e. a so-called post, and a horizontal part, i.e. a so-called bunk beam. The timber to be transported is loaded on the bunk beams and the posts support the load from the sides.

Conventionally, the bunk structures have been supplied as frame parts with bunk beams and posts arrangeable in the frame part. Various quick fastening solutions, such as pin mounting, are known for attaching the posts to the bunk beam, but typically in those cases the bunk structure has to be constructed very bulky in order to ensure durability. This raises the total weight of the product, increases manufacturing costs, freight costs and fuel costs of a transport vehicle such as truck.

It is also known to provide the frame part with upwardly directed sleeve parts, into which the posts may be fitted. A solution of this kind is known, for instance, from publication US 6299395. A problem with this solution is that the sleeve parts tend to become slack, and consequently the posts are able to move laterally, which makes the problem even worse.

Further, there are known continuous bunk structures, in which the vertical part and the horizontal part form a continuous U-shaped structure. Transportation of bunks of this kind poses problems, however, because they require a lot of space, for instance, in shipping.

### Brief description

The object of the solution is to provide a bunk structure of a novel type and an assembly method. The object is achieved with a structure and a method that are characterised by what is stated in the independent claims. Preferred embodiments of the solution are disclosed in the dependent claims.

The solution is based on the fact that in the lower part of a vertical support there are arranged two supports between which a bunk may be slid so as to assemble the bunk structure.

An advantage with the described method and structure is, for instance, that the bunk structure may be made lighter than in conventional solutions without compromising the rigidity of the structure. In addition, it may be supplied as parts that the customer does not have to weld.

### Brief description of the figures

The solution will now be described in greater detail by means of preferred embodiments and with reference to the accompanying drawings, in which:
Figure 1 shows schematically a timber load space;
Figure 2 is a schematic end view of a bunk structure of the timber load space;
Figure 3 shows schematically a detail in an embodiment of the bunk structure, seen from the end of the timber load space;
Figure 4 shows schematically a cross-sectional detail in an embodiment of the bunk structure in the direction of section A-A in Figure 3;
Figure 5 shows schematically a lateral cross section of a detail in an embodiment of the bunk structure of Figure 3;
Figure 6 shows schematically some dimensions relating to the bunk structure;
Figures 7a and 7b show schematically a cross-sectional profile of a vertical support in some embodiments; and
Figure 8 shows schematically a method for assembling the bunk structure.

### Detailed description

Timber load spaces used in timber transport comprise transport supports which comprise a substantially horizontal part, on which the timber is loaded, and at each end of the horizontal part a substantially vertical part, which supports the load from the sides. In connection with this description the horizontal part whereon the load is loaded is called a bunk and the vertical part which supports the load from the sides, and which in some contexts is also known as a post, for instance, is called a vertical support.

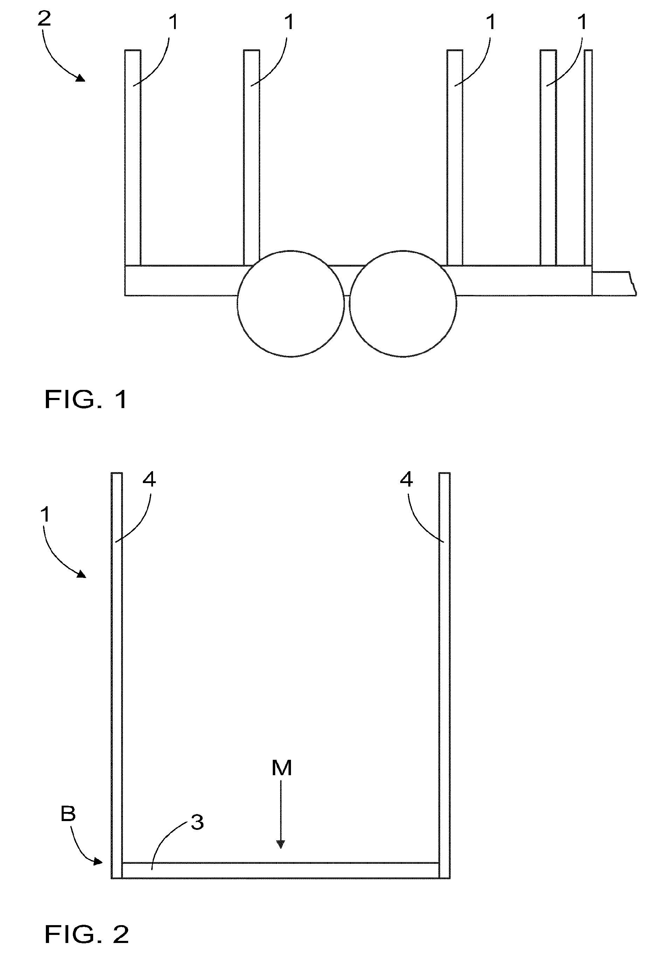

Figure 1 shows a timber load space. The timber to be transported may thus be loaded in a load space 2, which comprises a plurality of substantially U-shaped structures, when seen from behind the load space, each of the structures comprising a substantially horizontal part, i.e. a lower part, also known as a bunk 3, and a substantially vertical part, i.e. a vertical support 4, at each end of the bunk or in the vicinity thereof, in other words, on both sides of the bunk, seen from behind the load space, when in use. In connection with this description, these structures, which typically comprise one bunk and two vertical posts, are called bunk structures 1. Depending on the application, the vertical supports may be substantially straight or their shape may vary in a manner known per se, when seen from the end of the load space, and consequently the shape of the bunk structure may vary, when seen from behind the load space. At least the lower part of the vertical supports is typically provided to be substantially straight when in use, and consequently substantially perpendicular to the bunk. Figure 2 shows a bunk structure, seen from the end of the timber load space, for instance from behind the load space. The figure reveals the basic construction of the bunk structure, which comprises at least a lower part, i.e. a bunk 3, and vertical posts 4 arrangeable at both ends thereof in a substantially perpendicular position, i.e. in a substantially vertical position when in use. The middle part of the bunk structure 1 refers here to a region in the bunk structure indicated by arrow M.

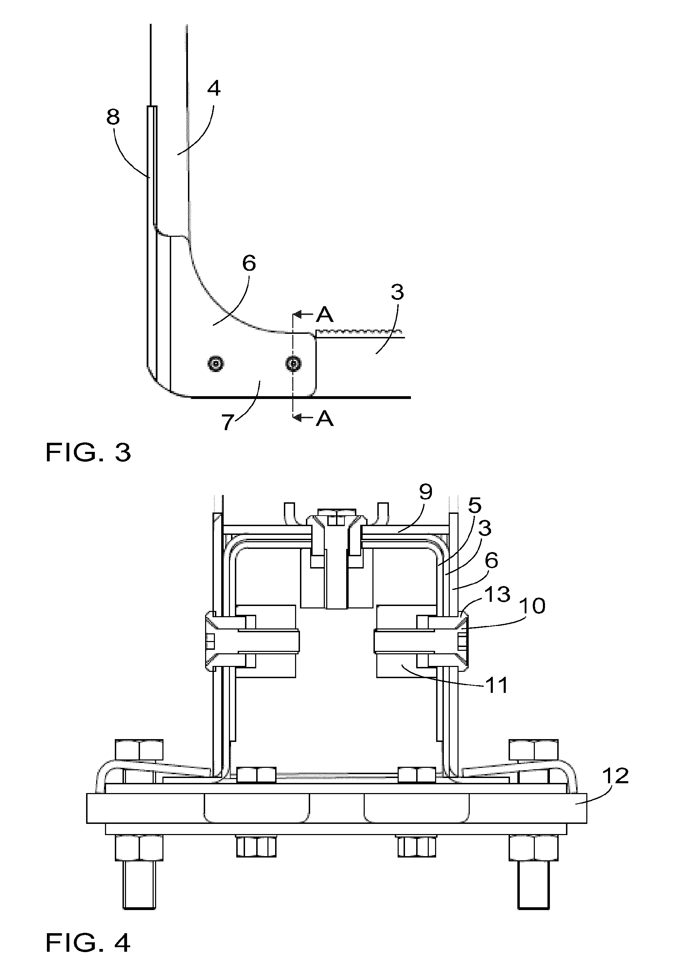

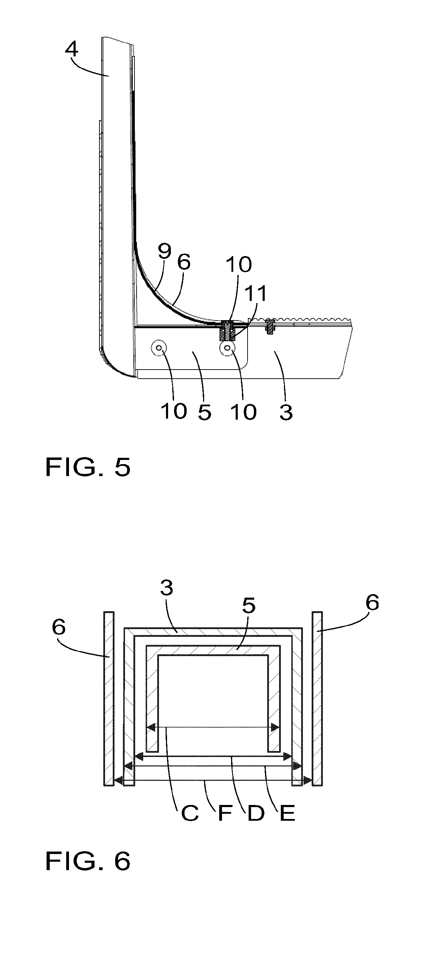

Figure 3 shows schematically a detail in an embodiment of the bunk structure, seen from the end of the timber load space at a point indicated by arrow B in Figure 2; Figure 4 shows a cross-sectional detail of the bunk structure in the direction of section A-A in Figure 3; and Figure 5 shows a lateral cross section of a detail of the bunk structure of Figure 3. The bunk structure 3 may then comprise a first support 5 and a second support 6 arranged, preferably rigidly, in the lower end of the vertical support 4. In that case the bunk 3 and the vertical support 4 are preferably movable in relation to one another such that in an assembled bunk structure the bunk 3 is arranged between the first support 5 and the second support 6 and thus supported in the intended place. Preferably the bunk 3 may be, for instance, slidable at least partly between the first support 5 and the second support 6 arranged in the vertical support 4. This may be carried out by moving the bunk 3 towards the vertical support 4, by moving the vertical support 4 towards the bunk 3 or by moving both the bunk 3 and the vertical support 4 towards one another. In this manner the bunk structure may be supplied and transported as parts and assembled readily and reliably without welding at an assembly stage. In addition, in this manner it is possible to provide a light bunk structure that is yet sufficiently rigid and strong.

In an embodiment the first support 5 may be arranged in a position that is substantially perpendicular to the vertical support 4, whereby it is directed towards the middle part of the bunk structure 1. In that case the first support 5 may act as a kind of transversal support. Thus, the bunk 3 may be supported effectively in the transversal direction of the bunk and consequently the bunk structure 1 may be braced in said direction.

In an embodiment the second support 6 may be arranged in the lower end of the vertical support 4, on the side of the vertical support, such that it is directed towards the middle part of the bunk structure 1. In that case the second support 6 acts as a kind of lateral support. With this solution it is possible to further brace the bunk structure 1 and to improve its assemblability by guiding the bunk 3 exactly to a correct place in the bunk structure.

In an embodiment the bunk structure 1 may comprise two said second supports 6 for each vertical support 4. In that case the second supports 6 may be arranged on the opposite sides of the vertical support 4, transversally to the bunk structure.

In an embodiment the second support 6 may be a substantially continuous structure that extends around the vertical support 4, at least on the outer edge of the bunk structure, and on both sides of the vertical support, transversally to the bunk structure. The second support 6 may comprise lateral parts 7 extending from the vertical support towards the middle region of the bunk structure, on the sides of the vertical support 4 transversally to the bunk structure. This structure is simple in view of assembly and it makes the bunk structure rigid and sturdy. In an embodiment the second support 6 may further comprise, on the outer edge side of the bunk structure 1, an upper support part 8 directed upwardly from said lateral part 7 towards the vertical support 4. In yet another embodiment, the upper support part 8 may be arranged throughout its entire length in the vertical support in a fixed manner, for instance by means of welding or in another manner known per se, so as to brace the bunk structure. Preferably the second support 6 is a continuous structure which comprises at least the lateral parts 7 and preferably also the upper support part 8.

In an embodiment the bunk structure 1 is furnished with attachment structures 11, for instance with guide bushings or other appropriate attachment structures known per se, in such a way that the bunk 3 may be connected detachably between the first support 5 and the second support 6 with fastening means 10, 13, for instance with locking screws and/or retainer bushings or other fastening means known per se. This facilitates assembly and, when necessary, also disassembly of the bunk structure 3. In addition, the bunk structure 1 may thus be easily constricted to a uniform and strong whole. In another embodiment the bunk 3 may be fixedly connectable between the first support 5 and the second support 6 in a manner known per se, for instance by welding.

In an embodiment the bunk structure 1 may comprise an arcuate support 9 that extends from the side of the vertical support 4 on the middle part side of the bunk structure 1 towards the middle part of the bunk structure 1 in such a way that the bunk 3 is connectable between said arcuate support and said first support. An arcuate support of this kind further increases the rigidity of the bunk structure, supporting and bracing the mutual position of the vertical support 4 and the bunk 3, in particular.

The bunk structure 1 may be arranged on a carrier 12 of the load space 2 or on a corresponding structure, for instance as shown in Figure 4, or in another manner known per se.

Figure 6 shows schematically in cross section some dimensions relating to the bunk structure in connection with an embodiment. In Figure 6 the parts are not shown to scale, and for instance, the mutual proportions of the parts are modified for ease of illustration. The figure shows schematically the first support 5, the second support 6 and the bunk 3. In the embodiment of the figure, the second support 6 may consist, for instance, of one continuous piece that extends on both sides of the vertical support 4 and the bunk 3 towards the middle of the bunk structure. In addition, the figure shows in transversal direction of the bunk 3 an outer dimension C in width of the cross-sectional profile of the first support, an inner dimension D in width of the cross-sectional profile of the bunk, an outer dimension E in width of the cross-sectional profile of the bunk and an inner dimension F in width of the cross-sectional profile of the second support. In that case the outer dimension C in width of the cross-sectional profile of the first support 5 transversally to the bunk is smaller than the inner dimension D in width of the cross-sectional profile of the bunk, and the second support 6 is arranged in such a manner that the bunk 3 is slidable into place such that in the assembled bunk structure 1 the bunk is arranged at least partly between the first support 5 and the second support 6 and thus supported in its intended place. In the embodiment of Figure 6, in which the second support 6 is substantially a continuous structure, which extends around the vertical support 4 at least on the outer edge of the bunk structure 1 and on both sides of the vertical support, the inner dimension F in width of the cross-sectional profile of the second support is larger than the outer dimension E in width of the cross-sectional profile of the bunk. In another embodiment, the bunk structure 1 may comprise one or two separate second supports 6 extending on one side of each vertical support 4 towards the middle of the bunk structure. In the embodiment, where the bunk structure 1 comprises two separate second supports 6 of this kind, the distance between the inner edges of these supports corresponds to the dimension F shown in the figure.

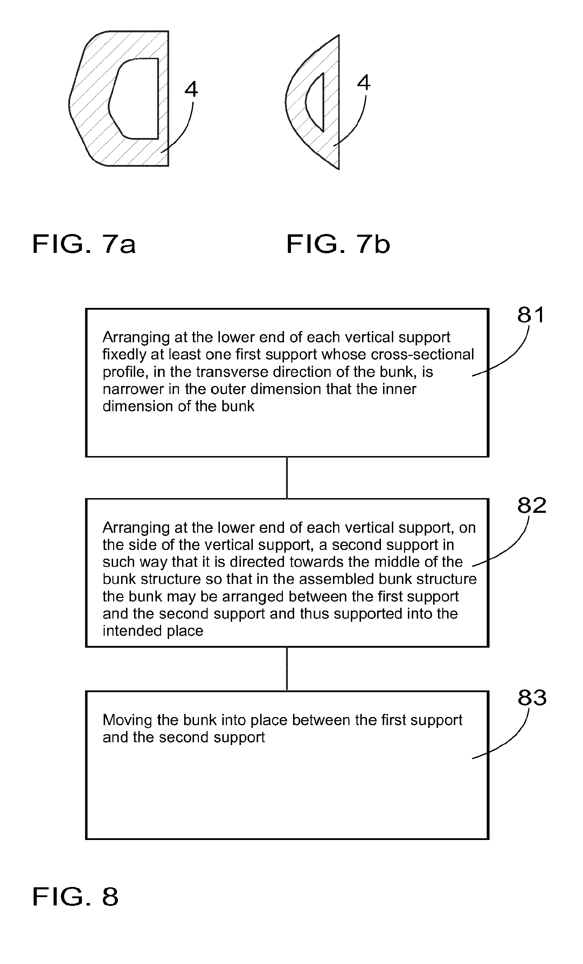

Figures 7a and 7b show schematically the cross-sectional profile of the vertical support in some preferred embodiments, i.e. the cross section of the vertical support 4 in the use position of the bunk structure, seen from above. In these embodiments the cross-sectional profile of the vertical support may be substantially wing-like, of which Figures 7a and 7b show two examples. A substantially wing-like cross-sectional profile refers to a profile which comprises one substantially straight side whose profile is substantially wider in the middle of this substantially straight side than at the ends of this substantially straight side and in which the profile comprises at least one curved portion on the side opposite to this substantially straight side. Preferably at least a portion of the side opposite to the substantially straight side, which portion is furthest away from the substantially straight side, has a curved profile. In this connection, substantially wider refers to a larger difference in width between the ends of the profile and its middle than bends used conventionally in conventional beams structures. Preferably the substantially straight side is arranged in the use position towards the middle of the bunk structure, i.e. on the side of the load to be loaded.

The substantially wing-like profile may significantly reduce the air resistance caused by the vertical supports 4, in particular, when the load space is empty. In addition, with a vertical support 4 of this kind it is possible to provide a slimmer vertical support solution, which enables an increased width of the load space without increasing the outer dimensions of the load space. In different embodiments the cross-sectional profile of the vertical support may also be square-shaped, rectangular, round or a post profile of some other known shape.

Figure 8 shows schematically a method for assembling a bunk structure, the bunk structure comprising a bunk and two vertical supports. In the method, at the lower end of each vertical support there is arranged 81, preferably fixedly, at least one first support whose cross-sectional profile, in the transverse direction of the bunk, is narrower in the outer dimension than the inner dimension of the bunk. Further, at the lower end of the vertical support, on the side of the vertical support, there is arranged 82 a second support in such a way that it is directed towards the middle of the bunk structure so that in the assembled bunk structure the bunk may be arranged between the first support and the second support and thus supported into the intended place. Further, the bunk is moved 83, for instance slid, into place between the first support and the second support. This may thus be carried out by moving the bunk, the vertical support and/or both. In an embodiment, the bunk is further connected detachably between the first support and the second support with fastening means. In another embodiment the bunk is connected fixedly between the first support 5 and the second support 6, for instance by welding.

In some embodiments the vertical support 4, the first support 5 and the second support 6 may be preferably arranged fixedly to one another to form a continuous structure, for instance, by welding. Particularly preferably also the arcuate support 9 and preferably also the guide bushing 11 are arranged fixedly to this structure, for instance, by welding. An advantage with this solution is that in the assembly stage of the bunk structure 1 the only thing needed is to move the bunk 3 and vertical support structure comprising the vertical support 4, the first support 5, the second support 6 and optionally also the arcuate support 9 and/or the guide bushing, with respect to one another in such a way that the bunk 3 is set into place between the first support 5 and the second support 6 and optionally the arcuate support 9 of the vertical support structure and to attach the structure readily and quickly to provide a sturdy, rigid and strong bunk structure 1 with fastening means 10, for instance attachment screws.

It will be obvious to a person skilled in the art that, as technology advances, the basic idea of the solution may be implemented in many different ways. The present solution and its embodiments are thus not restricted to the examples described above, but may vary within the scope of the claims.

## Claims

1. A bunk structure comprising a bunk and two vertical supports, **characterized in that** at the lower end of each vertical support there is arranged at least one first support whose cross-sectional profile has an outer dimension in the transverse direction of the bunk that is smaller than the inner dimension of the cross-sectional profile of the bunk, and a second support which is arranged in the vertical support, on the side of the vertical support, in such a way that it is directed towards the middle part of the bunk structure, in such a way that in the assembled bunk structure the bunk is arranged between the first support and the second support and thus supported into the intended place.

2. The bunk structure of claim 1, **characterized in that** the first support is arranged substantially perpendicularly to the vertical support in such a way that it is directed towards the middle of the bunk structure.

3. The bunk structure of claim 1, **characterized in that** the bunk structure comprises two said second supports for each vertical support, one on each opposite side of the vertical support.

4. The bunk structure of claim 1 or 2, **characterized in that** the second support is a substantially continuous structure which extends around the vertical support at least on the outer edge of the bunk structure and on both sides of the vertical support and comprises on said sides lateral parts extending from the vertical support towards the middle of the bunk structure.

5. The bunk structure of claim 4, **characterized in that** the second support further comprises, on the outer edge side of the bunk structure, an upper support part directed from said lateral part upwardly towards the vertical support.

6. The bunk structure of claim 5 **characterized in that** said upper support part is arranged throughout its length fixedly in the vertical support so as to brace the bunk structure.

7. The bunk structure of any one of the preceding claims, **characterized in that** the bunk structure is furnished with attachment structures in such a way that the bunk is connectable between the first support and the second support with fastening means.

8. The bunk structure of any one of the preceding claims, **characterized in that** the bunk structure further comprises an arcuate support that extends from the side of the vertical support, on the side of the middle of the bunk structure, towards the middle of the bunk structure in such a way that the bunk is connectable between said arcuate support and said first support.

9. The bunk structure of any one of the preceding claims, **characterized in that** the cross-sectional profile of the vertical support is substantially wing-like.

10. A method for assembling a bunk structure, the bunk structure comprising a bunk and two vertical supports, **characterized by**
arranging at the lower end of each vertical support fixedly at least one first support whose cross-sectional profile, in the transverse direction of the bunk, is narrower in the outer dimension than the inner dimension of the bunk,
arranging at the lower end of each vertical support, on the side of the vertical support, a second support in such a way that it is directed towards the middle of the bunk structure so that in the assembled bunk structure the bunk may be arranged between the first support and the second support and thus supported into the intended place, and
moving the bunk into place between the first support and the second support.

11. The method of claim 10, **characterized by** connecting the bunk between the first support and the second support with fastening means.
